# EUROPÄISCHE PATENTSCHRIFT

(11) **EP 2 831 445 B1**
(45) Veröffentlichungstag und Bekanntmachung des Hinweises auf die Patenterteilung: **01.11.2017**
(21) Anmeldenummer: 13711388.2
(22) Anmeldetag: 22.03.2013
(51) Int. Cl.: F16D 55/225, F16D 65/097

(54) **SCHEIBENBREMSE FÜR EIN NUTZFAHRZEUG UND BREMSBELAG FÜR EINE SCHEIBENBREMSE**
DISC BRAKE FOR A UTILITY VEHICLE AND BRAKE LINING FOR A DISC BRAKE
FREIN À DISQUE POUR UN VÉHICULE UTILITAIRE ET GARNITURE DE FREIN POUR UN FREIN À DISQUE

(30) Priorität: 26.03.2012 DE 102012006135
(43) Veröffentlichungstag der Anmeldung: 04.02.2015
(73) Patentinhaber: KNORR-BREMSE Systeme für Nutzfahrzeuge GmbH, 80809 München (DE)
(72) Erfinder: FISCHL, Tobias, 94474 Vilshofen (DE)
(86) Internationale Anmeldenummer: PCT/EP2013/056008
(87) Internationale Veröffentlichungsnummer: WO 2013/143981

(56) Entgegenhaltungen:
- DE-A1- 4 417 783
- DE-A1- 19 623 867
- DE-A1- 19 954 309
- US-A- 4 364 455

## Beschreibung

Die vorliegende Erfindung betrifft eine Scheibenbremse für ein Nutzfahrzeug gemäß dem Oberbegriff des Anspruchs 1 sowie einen Bremsbelag für eine solche Scheibenbremse gemäß dem Oberbegriff des Anspruchs 6. Bei den gattungsgemäßen Scheibenbremsen, wie z.B. aus US-A-4 363 455 bekannt, übergreift ein Bremssattel eine Bremsscheibe, wobei in der Regel beidseitig der Bremsscheibe Bremsbeläge in einem Belagschacht eines ortsfesten Bremsträgers angeordnet sind, die mithilfe einer Zuspanneinrichtung, die wenigstens einen an den Bremsbelag andrückbaren Zuspannstempel aufweist, die Bremsbeläge an die Bremsscheibe andrückt.

Zur seitlichen Abstützung der Bremsbeläge in dem Belagschacht sind seitlich an dem Bremsträger Bremsträgerhörner angeformt.

Da die Bremsbeläge und die Zuspannstempel nicht fest miteinander verbunden sind, führt dies dazu, dass nach einem erfolgten Bremsvorgang beim Lösen der Bremsung nur die Zuspannstempel von der Bremsscheibe wegbewegt werden, die Bremsbeläge selbst werden hingegen nicht aktiv aus ihrer an der Bremsscheibe anliegenden Bremsposition wegbewegt, sondern lösen sich beispielsweise durch während der Fahrt auftretende Rüttelbewegungen.

Beim Betätigen der Scheibenbremse wird daher eine Bremskraft über die Zuspanneinrichtung mit den Zuspannstempeln auf die Bremsbeläge und über diese auf die Bremsscheibe übertragen. Bei diesem Vorgang werden die Zuspannstempel in Richtung der Bremsscheibe bewegt. Zur Sicherstellung eines konstanten Luftspiels wird diese Zuspanneinheit je nach dem Verschleiß des Reibbelags der Bremsbeläge nachgestellt, d.h. weiter in Richtung der Bremsscheibe bewegt. Ein Zurückbewegen der Bremsbeläge aus der Bremsposition bei Anlage einer Bremsscheibe geschieht lediglich durch Rüttelbewegungen der Bremsscheibe, Reibung oder sonstige äußere Einflüsse.

Nachteilig an diesem oben beschriebenen Stand der Technik sind Risiken wie beispielsweise die Erhöhung eines Restschleifmomentes, eines Heißlaufens der Bremse durch kontinuierliche Anlage der Bremsbeläge an der Bremsscheibe, ein erhöhter Reibbelagsverschleiß oder auch Ungleichverschleiß der Bremsbeläge.

Aufgabe der vorliegenden Erfindung ist es, eine Scheibenbremse für ein Nutzfahrzeug und einen Bremsbelag bereitzustellen, mit dem die oben genannten Nachteile beseitigt werden, insbesondere ein unnötiger Verschleiß der Bremsbeläge durch ungewollte Anlage der Bremsbeläge an der Bremsscheibe im Nichtbremszustand der Scheibenbremse zu vermeiden.

Diese Aufgabe wird durch eine Scheibenbremse für ein Nutzfahrzeug mit den Merkmalen des Anspruchs 1 sowie durch einen Bremsbelag mit den Merkmalen des Anspruchs 6 gelöst.

Bei der erfindungsgemäßen Scheibenbremse sind die den Bremsträgerhörnern zugewandten Seitenflächen des Bremsbelags und die diesen Seitenflächen benachbarten Bremsträgerhörner durch ein elastisch verformbares Elastomer-Bauteil miteinander verbunden, wobei die Elastomer-Bauteile derart positioniert sind, dass eine Zuspannbewegung des Bremsbelags hin zur Bremsscheibe die elastische Verformung und damit eine der Zuspannrichtung entgegengesetzte Rückstellkraft der Elastomer-Bauteile erhöht.

Durch diese von den Elastomer-Bauteilen auf den Bremsbelag ausgeübte Rückstellkraft wird der Bremsbelag nach dem Zurückfahren der Zuspanneinrichtung in die Nichtbremsstellung aktiv von der Bremsscheibe gelöst und verhindert so ein unnötiges Verschleißen der Bremsbeläge und ein Heißlaufen der Bremse. Außerdem kann das auftretende Restschleifmoment der Bremsscheibe dadurch deutlich reduziert werden.

Die Elastomer-Bauteile sind in Nuten gehalten, die in den den Bremsträgerhörnern zugewandten Seitenflächen des Bremsbelags vorgesehen sind. Dadurch wird ein sicherer Halt der Elastomer-Bauteile am Bremsbelag gewährleistet.

Die Elastomer-Bauteile sind dabei insbesondere formschlüssig in den Nuten festgelegt. Denkbar ist auch eine stoffschlüssige Festlegung der Elastomer-Bauteile am Bremsbelag, insbesondere durch Verkleben.

Gemäß einer weiteren Ausführungsvariante weisen auch die dem Bremsbelag zugewandten Flächen der Bremsträgerhörner Nuten auf, in denen die Elastomer-Bauteile gehalten sind. Wichtig ist hier der Einsatz von Elastomer-Bauteilen mit hinreichender Dehnbarkeit, da die Elastomer-Bauteile mit zunehmendem Verschleiß der Reibbeläge größere Dehnungstrecken aushalten müssen, da die Neutral- (nicht Brems-) position des Bremsbelags mit zunehmendem Verschleiß in Richtung der Bremsscheibe vorrückt.

Die erfindungsgemäßen Bremsbeläge zeichnen sich dadurch aus, dass an jeder der Seitenflächen des Bremsbelags jeweils ein elastisches formbares

Elastomer-Bauteil angeordnet ist, wodurch beim Verbau solcher erfindungsgemäßer Bremsbeläge in Scheibenbremsen der oben genannten Art in einfacher Weise eine aktive Rückstellung der Bremsbeläge nach einem Bremsvorgang in eine Neutralposition, bei der der Reibbelag nicht an der Bremsscheibe anliegt, erreicht wird.

Nachfolgend werden Ausführungsbeispiele der Erfindung anhand der beiliegenden Zeichnungen näher erläutert.

Es zeigen:
- Figur 1: eine perspektivische Teilansicht eines Bremsbelag mit daran angeordnetem Elastomer-Bauteil,
- Figur 2: eine Ansicht von oben auf einen Ausschnitt einer Scheibenbremse in der zugespannten Bremsposition und
- Figur 3: eine Ansicht von oben auf die Scheibenbremse aus Figur 2 mit in die Ausgangslage zurückgestelltem Bremsbelag.

In der nachfolgenden Figurenbeschreibung beziehen sich Begriffe wie oben, unten, links, rechts, vorne, hinten usw. ausschließlich auf die in den jeweiligen Figuren gewählte beispielhafte Darstellung und Position der Scheibenbremse, der Bremsscheibe, des Bremsbelags, des Elastomer-Bauteils und dergleichen. Diese Begriffe sind nicht einschränkend zu verstehen, das heißt, durch verschiedene Arbeitsstellungen oder die spiegelsymmetrische Auslegung oder dergleichen können sich diese Bezüge ändern.

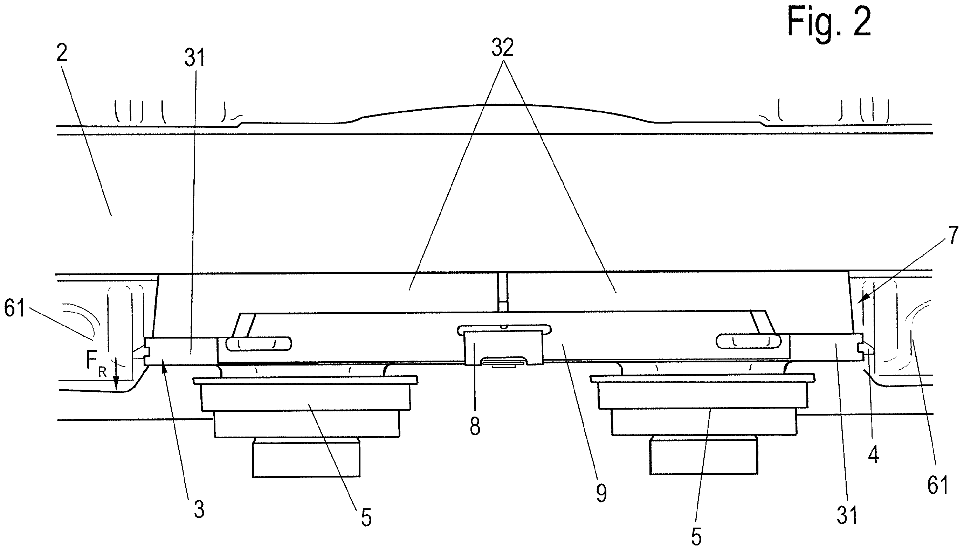

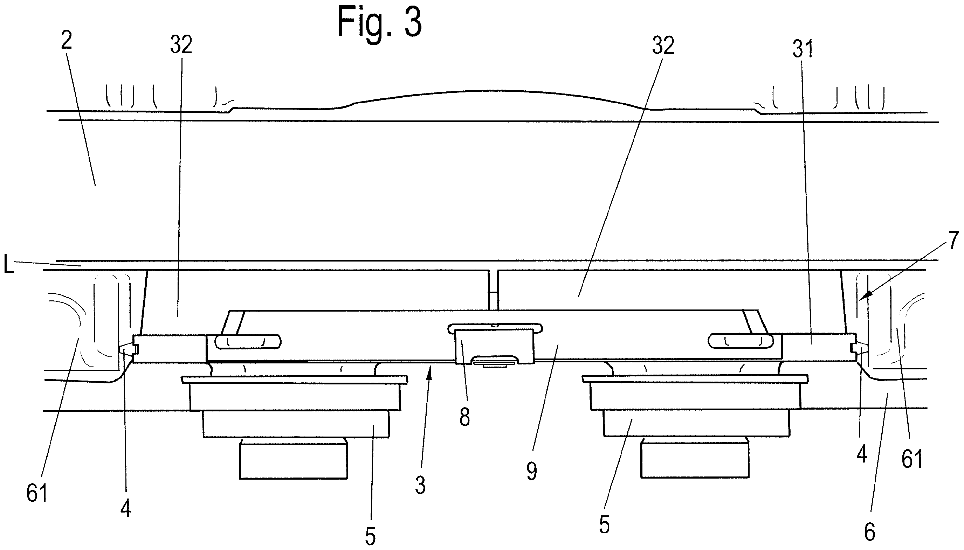

In den Figuren 2 und 3 ist eine Draufsicht auf eine Scheibenbremse dargestellt, mit einer Bremsscheibe 2 und einem Teil der Bremsscheibe 2 umgreifenden ortsfesten Bremsträger 6 mit einem Belagschacht 7, an dem mindestens ein an der Bremsscheibe 2 andrückbarer Bremsbelag 3 gelagert ist. Der Belagschacht 7 ist zur Abstützung des einliegenden Bremsbelags durch seitliche Bremsträgerhörner 61 begrenzt. Zur radialen Halterung des Bremsbelags 3 in dem Belagschacht 7 ist auf einer dem Grund des Belagschachtes 7 gegenüberliegenden Seite des Bremsbelags 3 eine Belaghaltefeder 9 an einer Belaghalteplatte 31, die den Reibbelag 32 des Bremsbelags 3 hält, festgelegt und zentral über dem Bremsbelag 3 von einer an einem (nicht gezeigten) Bremssattel, der die Bremsscheibe 2 übergreift, gehaltene Belaghaltebügel 8 radial in den Belagschacht hineingedrückt wird.

Um einen Bremsvorgang auszuführen, drücken Zuspannstempel 5 einer Zuspanneinrichtung gegen die dem Reibbelag 32 abgewandte Seite der Belagträgerplatte 31 des Bremsbelags, bis der Reibbelag 32 des Bremsbelags die Reibfläche der Bremsscheibe 2 berührt und so die Rotation der Bremsscheibe abbremst. Die Zuspannposition ist in Figur 2 gezeigt.

Nach Beendigung des Bremsvorgangs werden die Zuspannstempel von der Bremsscheibe 2 weg zurückgefahren. Damit auch der nicht fest mit dem oder den Zuspannstempel 5 verbundene Bremsbelag in seine von der Bremsscheibe 2 gelöste Ausgangsposition zurückkehrt, sind die den Bremsträgerhörnern 61 zugewandten Seitenflächen 33 des Bremsbelags 3 und die diesen Seitenflächen 33 benachbarten Bremsträgerhörnern 61 durch ein elastisch verformbares Elastomer-Bauteil 4 miteinander verbunden, wie es in den Figuren 2 und 3 gut zu erkennen ist. Die beidseitig vorzugsweise an der Belagträgerplatte 31 festgelegten Elastomer-Bauteile 4 sind dabei derart positioniert, das eine Zuspannbewegung des Bremsbelags 3 hin zur Bremsscheibe 2 eine elastische Verformung und damit eine der Zuspannrichtung entgegengesetzte Rückstellkraft F_{R} der Elastomer-Bauteile erhöht.

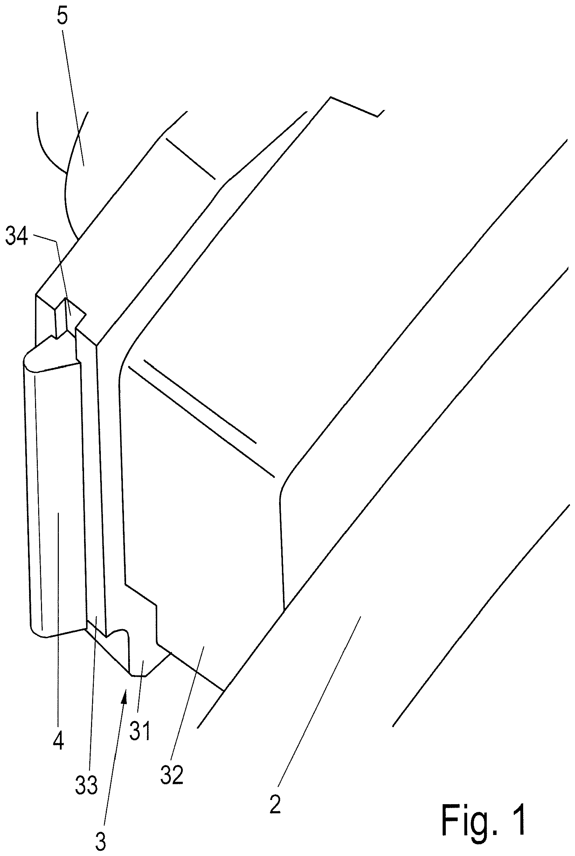

Wie besonders gut in Figur 1 zu erkennen ist, sind in den den Bremsträgerhörnern 61 zugewandten Seitenflächen 33 des Bremsbelags 3 Nuten 34 vorgesehen, in denen die Elastomer-Bauteile 4 gehalten sind.

Die Nuten 34 sind dabei vorzugsweise in der Belagträgerplatte 31 des Bremsbelags 3 eingebracht. Der Querschnitt der Nuten 34 ist dabei vorzugsweise rechteckig, wie es in Figur 1 gezeigt ist, denkbar sind aber auch Querschnitte dergestalt, dass sie beispielsweise einen Hinterschnitt bilden, so dass ein Teil des Elastomer-Bauteils 4 formschlüssig in der Nut 34 gehalten wird. Denkbar ist auch eine stoffschlüssige Halterung der Elastomer-Bauteile in der Nut 34 des Bremsbelags 3 oder auch eine Kombination der oben genannten Halterungsmöglichkeiten.

Der Querschnitt des aus der Nut 34 hervorstehenden Teils der Elastomer-Bauteile 4 ist bevorzugt etwa dreieckförmig, wobei eine Basisseite dieses Dreieckes als Stützfläche an den Seitenflächen 33 der Belagträgerplatte 31 dient und die gegenüberliegende, hier abgerundet ausgebildete, Spitze des Dreiecks im in den Belagschacht eingebauten Zustand des Bremsbelags 3 sich an der Fläche der Bremsträgerhörner 61 abstützt.

Während in Figur 3 eine Neutralposition der Elastomer-Bauteile 4 gezeigt ist, in einer Nicht-Bremsposition des Bremsbelags 3, bei dem zwischen der Bremsfläche der Bremsscheibe 2 und dem Reibbelag 32 des Bremsbelags eine Lücke L zu erkennen ist, sind die Elastomer-Bauteile 4 im in der Figur 2 dargestellten Bremsposition des Bremsbelags 3 von den Seitenflächen 33 des Bremsbelags 3 weg radial zur Drehachse der Bremsscheibe 2 nach außen verformt. Aufgrund der Elastizität der Elastomer-Bauteile 4 üben sie somit eine Rückstellkraft F_{R} auf den Bremsbelag 3 aus, die zum Tragen kommt, sobald die Zuspannstempel 5 aus der Bremsposition in ihre Ausgangsstellung zurückgefahren werden.

In einer nicht dargestellten weiteren Ausführungsvariante ist es auch denkbar, dass die Elastomer-Bauteile 4 nicht nur in Nuten in den Seitenflächen 33 des Bremsbelags 3 gehalten sind, sondern auch in entsprechenden Nuten in den den Seitenflächen 33 des Bremsbelags 3 zugewandten Flächen der Bremsträgerhörner 61.

### Bezugszeichenliste

- 2: Bremsscheibe
- 3: Bremsbelag
- 4: Elastomer-Bauteil
- 5: Zuspannstempel
- 6: Bremsträger
- 7: Belagschacht
- 8: Belaghaltebügel
- 9: Belaghaltefeder

- 31: Belaghalteplatte 32 Reibbelag
- 33: Seitenfläche
- 34: Nut

- 61: Bremsträgerhörner

- F_{R}: Rückstellkraft
- L: Lücke

## Patentansprüche

1. Scheibenbremse für ein Nutzfahrzeug, aufweisend
- einen eine Bremsscheibe (2) übergreifenden Bremssattel,
- in dem mindestens ein an die Bremsscheibe (2) andrückbarer und in einem Belagschacht (7) eines ortsfesten Bremsträgers (6) gelagerter Bremsbelag (3) angeordnet ist,
- wobei der Belagschacht (7) seitlich zur Abstützung des einliegenden Bremsbelages (3) durch Bremsträgerhörner (61) begrenzt ist,
- mit einer Zuspanneinrichtung, die mindestens einen an den Bremsbelag (3) drückbaren Zuspannstempel (5) aufweist,
- wobeidie den Bremsträgerhörnern (61) zugewandten Seitenflächen (33) des Bremsbelages (3) und die diesen Seitenflächen (33) benachbarten Bremsträgerhörner (6) durch ein elastisch verformbares Elastomer-Bauteil (4) miteinander verbunden sind, wobei die Elastomer-Bauteile (4) derart positioniert sind, dass eine Zuspannbewegung des Bremsbelags (3) hin zur Bremsscheibe (2) die elastische Verformung und damit eine der Zuspannrichtung entgegen gesetzte Rückstellkraft (F_{R}) der Elastomer-Bauteile (4) erhöht,
**dadurch gekennzeichnet, dass**
- die den Bremsträgerhörnern (61) zugewandten Seitenflächen (33) des Bremsbelages (3) Nuten (34) aufweisen, in denen die Elastomer-Bauteile (4) gehalten sind.

2. Scheibenbremse nach Anspruch 1, **dadurch gekennzeichnet, dass** die dem Bremsbelag (3) zugewandten Flächen der Bremsträgerhörner (61) Nuten aufweisen, in denen die Elastomer-Bauteile (4) gehalten sind.

3. Scheibenbremse nach Anspruch 1 oder 2, **dadurch gekennzeichnet, dass** die Elastomer-Bauteile (4) formschlüssig in den Nuten (34) festgelegt sind.

4. Scheibenbremse nach einem der vorhergehenden Ansprüche, **dadurch gekennzeichnet, dass** die Elastomer-Bauteile (4) stoffschlüssig in den Nuten (34) festgelegt, insbesondere verklebt sind.

5. Scheibenbremse nach einem der vorhergehenden Ansprüche, **dadurch gekennzeichnet, dass** die Nuten (34) in den Bremsträgerhörnern (61) zugewandten Seitenflächen (33) des Belagträgers (31) des Bremsbelages (3) vorgesehen sind.

6. Bremsbelag für eine Scheibenbremse eines Nutzfahrzeuges mit einer Belagträgerplatte und einem darauf angeordneten Reibbelag, **dadurch gekennzeichnet, dass** an jeder der Seitenflächen (33) des Bremsbelages (3) jeweils ein elastisch verformbares Elastomer-Bauteil (4) angeordnet ist, wobei die Seitenflächen (33) des Bremsbelages (3) Nuten (34) aufweisen, in denen die Elastomer-Bauteile (4) gehalten sind.

7. Bremsbelag nach Anspruch 6, **dadurch gekennzeichnet, dass** die Elastomer-Bauteile (4) formschlüssig in den Nuten (34) festgelegt sind.

8. Bremsbelag nach einem der Ansprüche 6 oder 7, **dadurch gekennzeichnet, dass** die Elastomer-Bauteile (4) stoffschlüssig in den Nuten (34) festgelegt, insbesondere verklebt sind.

9. Bremsbelag nach einem der Ansprüche 6 bis 8, **dadurch gekennzeichnet, dass** die Nuten (34) in den Bremsträgerhörnern (61) zugewandten Seitenflächen (33) des Belagträgers (31) des Bremsbelages (3) vorgesehen sind.

10. Bremsbelag nach einem der Ansprüche 6 bis 9, **dadurch gekennzeichnet, dass** der aus den Nuten (34) des Bremsbelages (3) hervorstehende Teil der Elastomer-Bauteile (4) einen dreieckförmigen Querschnitt aufweist.

## Claims

1. Disc brake for a commercial vehicle, comprising
- a brake calliper encompassing a brake disc (2),
- in which is located at least one brake pad (3), which can be pressed against the brake disc (2) and is located in a pad shaft (7) of a stationary adapter (6)
- wherein the pad shaft (7) is bounded laterally by adapter horns (61) for supporting the installed brake pad (3),
- further comprising an application device having at least one application plunger (5), which can be pressed against the brake pad (3),
- wherein the side faces (33) of the brake pad (3) which face the adapter horns (61) and the adapter horns (61) adjacent to these lateral surfaces (33) are connected to one another by an elastically deformable elastomer component (4), the elastomer components (4) being positioned such that an application movement of the brake pad (3) towards the brake disc (2) increases the elastic deformation and thus a restoring force (F_{R}) of the elastomer components (4) against the application direction,
**characterised in that**
- the lateral surfaces (33) of the brake pad (3) which face the adapter horns (61) have grooves (34) in which the elastomer components (4) are held.

2. Disc brake according to claim 1, **characterised in that** the surfaces of the adapter horns (61) which face the brake pad (3) have grooves in which the elastomer components (4) are held.

3. Disc brake according to claim 1 or 2, **characterised in that** the elastomer components (4) are positively located in the grooves (34).

4. Disc brake according to any of the preceding claims, **characterised in that** the elastomer components (4) are located in the grooves (34) by adhesive force, in particular by bonding.

5. Disc brake according to any of the preceding claims, **characterised in that** the grooves (34) are provided in side faces (33) of the backing plate (31) of the brake pad (3), which side faces (33) face the adapter horns (61).

6. Brake pad for a disc brake of a motor vehicle, comprising a backing plate and a friction lining located thereon, **characterised in that** an elastically deformable elastomer component (4) is provided on each of the side faces (33) of the brake pad (3), the side faces (33) of the brake pad (3) having grooves (34) in which the elastomer components (4) are held.

7. Brake pad according to claim 6, **characterised in that** the elastomer components (4) are positively located in the grooves (34).

8. Brake pad according to claim 6 or 7, **characterised in that** the elastomer components (4) are located in the grooves (34) by adhesive force, in particular by bonding.

9. Brake pad according to any of claims 6 to 8, **characterised in that** the grooves (34) are provided in side faces (33) of the backing plate (31) of the brake pad (3), which side faces (33) face the adapter horns (61).

10. Brake pad according to any of claims 6 to 9, **characterised in that** the part of the elastomer components (4) which projects from the grooves (34) of the brake pad (3) has a triangular cross-section.

## Revendications

1. Frein à disque pour un véhicule utilitaire, comportant
- un étrier de frein enjambant un disque (2) de frein,
- dans lequel est disposée au moins une garniture (3) de frein, qui peut être pressée sur le disque (2) de frein et qui est montée dans un puits (7) de garniture d'un porte-frein (6) à poste fixe,
- dans lequel le puits (7) de garniture est délimité latéralement, pour l'appui de la garniture (3) de frein y entrant, par des cornes (61) de porte-frein,
- comprenant un dispositif de serrage, qui a au moins un poinçon (5) de serrage pouvant être poussé sur la garniture (3) de frein,
- dans lequel les faces (33) latérales, tournées vers les cornes (61) du porte-frein, de la garniture (3) de frein et les cornes (6) du porte-frein, voisines de ces faces (33) latérales, sont reliées entre elles par une pièce (4) en élastomère déformable élastiquement, les pièces (4) en élastomère étant placées de manière à ce qu'un déplacement de serrage de la garniture (3) de frein, en direction du disque (2) de frein, augmente la déformation élastique et ainsi une force (F_{R}) de rappel, contraire au sens de serrage, des pièces (4) en élastomère,
**caractérisé en ce que**
- les surfaces (33) latérales, tournées vers les cornes (61) du porte-frein, de la garniture (3) de frein ont des rainures (34) dans lesquelles les pièces (4) en élastomère sont maintenues.

2. Frein à disque suivant la revendication 1, **caractérisé en ce que** les surfaces, tournées vers la garniture (3) de frein, des cornes (61) du porte-frein ont des rainures dans lesquelles les pièces (4) en élastomère sont maintenues.

3. Frein à disque suivant la revendication 1 ou 2, **caractérisé en ce que** les pièces (4) en élastomère sont fixées à complémentarité de forme dans les rainures (34).

4. Frein à disque suivant l'une des revendications précédentes, **caractérisé en ce que** les pièces (4) en élastomère sont fixées à coopération de matière dans les rainures (34), en y étant notamment collées.

5. Frein à disque suivant l'une des revendications précédentes, **caractérisé en ce que** les rainures (34) sont prévues dans les surfaces (33) latérales, tournées vers les cornes (61) du porte-frein, du porte-garniture (31) de la garniture (3) de frein.

6. Garniture de frein pour un frein à disque d'un véhicule utilitaire, comprenant une plaque formant porte-garniture et une garniture de friction, qui y est mise, **caractérisé en ce que**, sur chacune des surfaces (33) latérales de la garniture (3) de frein, est disposée respectivement une pièce (4) en élastomère déformable élastiquement, les surfaces (33) latérales de la garniture (3) de frein ayant des rainures (34) dans lesquelles les pièces (4) en élastomère sont maintenues.

7. Garniture de frein suivant la revendication 6, **caractérisée en ce que** les pièces (4) en élastomère sont fixées à complémentarité de forme dans les rainures (34).

8. Garniture de frein suivant l'une des revendications 6 ou 7, **caractérisée en ce que** les pièces (4) en élastomère sont fixées à coopération de matière dans les rainures (34), en y étant notamment collées.

9. Garniture de frein suivant l'une des revendications 6 à 8, **caractérisée en ce que** les rainures (34) sont prévues dans les surfaces (33) latérales, tournées vers les cornes (61) du porte-frein, du porte-garniture (31) de la garniture (3) de frein.

10. Garniture de frein suivant l'une des revendications 6 à 9, **caractérisée en ce que** la partie, en saillie des rainures (34) de la garniture (3) de frein, des pièces (4) en élastomère a une section transversale triangulaire.
